# EUROPÄISCHE PATENTSCHRIFT

(11) **EP 1 903 863 B1**
(45) Veröffentlichungstag und Bekanntmachung des Hinweises auf die Patenterteilung: **18.07.2018**
(21) Anmeldenummer: 06762208.4
(22) Anmeldetag: 27.06.2006
(51) Int. Cl.: A01N 25/32, A01N 47/36, A01N 41/10, A01N 43/707, A01N 37/22, A01N 37/40, A01N 33/18, A01N 25/04, A01P 13/00

(54) **KULTURPFLANZENVERTRÄGLICHE HERBIZIDE MITTEL ENTHALTEND HERBIZIDE UND ACYLSULFAMOYLBENZOESÄUREAMIDE SAFENER**
CULTIGEN-COMPATIBLE HERBICIDAL AGENTS CONTAINING HERBICIDES AND ACYLSULFAMOYLBENZAMIDE SAFENERS
PRODUITS HERBICIDES COMPATIBLES AVEC LES PLANTES CULTIVÉES, CONTENANT DES HERBICIDES ET DES AMIDES D'ACIDES ACYLSULFOMOYLBENZOÏQUES COMME PHYTOPROTECTEURS

(30) Priorität: 07.07.2005 DE 102005031787
(43) Veröffentlichungstag der Anmeldung: 02.04.2008
(73) Patentinhaber: Bayer CropScience AG, 40789 Monheim (DE)
(72) Erfinder: ROSINGER, Christopher, 65719 Hofheim (DE); EVANS, Paul, 51519 Odenthal (DE); HACKER, Erwin, 65329 Hochheim (DE)
(74) Vertreter: BIP Patents
(86) Internationale Anmeldenummer: PCT/EP2006/006181
(87) Internationale Veröffentlichungsnummer: WO 2007/006416

(56) Entgegenhaltungen:
- WO-A-99/16744
- WO-A-99/66795
- WO-A-03/022050
- US-A1- 2002 137 759
- US-A1- 2004 087 445
- US-A1- 2004 224 849

## Beschreibung

Die Erfindung betrifft das technische Gebiet der Pflanzenschutzmittel, die gegen unerwünschten Pflanzenwuchs eingesetzt werden können und als Wirkstoffe eine Kombination von mindestens einem Herbizid und mindestens einem Safener enthalten.

In der Regel sind Herbizide nicht immer ausreichend verträglich mit (d.h. nicht selektiv genug bei) einigen wichtigen Kulturpflanzen, wie Mais, Reis oder Getreide, so daß ihrem Einsatz enge Grenzen gesetzt sind. Sie können deshalb in manchen Kulturen nicht oder nur in so geringen Aufwandmengen eingesetzt werden, daß die erwünschte breite herbizide Wirksamkeit gegenüber Schadpflanzen nicht gewährleistet ist. Speziell können viele Herbizide nicht vollständig selektiv gegen Schadpflanzen in Mais, Reis, Getreide, Zuckerrohr und einigen anderen Kulturen eingesetzt werden.

Zur Überwindung dieser Nachteile ist es bekannt, Herbizide in Kombination mit einem sogenannten Safener oder Antidot einzusetzen. Unter einem Safener ist eine Verbindung zu verstehen, die die phytotoxischen Eigenschaften eines Herbizides gegenüber Nutzpflanzen aufhebt oder verringert, ohne daß die herbizide Wirkung gegenüber Schadpflanzen wesentlich vermindert wird. Aus einigen Dokumenten sind bereits herbizide Mittel enthaltend Herbizide und Safener bekannt. So werden beispielsweise in WO 96/14304 herbizide Mittel von Sulfonylharnstoffen und in WO 03/022050 herbizide Mittel von Benzoylisoxazolen jeweils mit einer Vielzahl von strukturell unterschiedlichen Safenern beschrieben. Aus US 6,251,827 sind Safener vom Typ der Acylsulfamoylbenzoesäureamide bekannt.
WO99/16744 offenbart bestimmte Acylsulfamoylbenzoesäureamide und deren Verwendung in Kombination mit spezifischen Sulfonylharnstoffen, Imidazolinonen und Aryloxyphenoxyherbiziden.

WO2003/022050 offenbart die Kombination bestimmter Acylsulfamoylbenzoesäureamide und herbizid wirksamer Benzoylisoxazole. In US2004/224849 ist die Kombination von Benzoylcyclohexanedionen und Acylsulfamoylbenzoesäureamiden genannt und in US20004/087445 ist die Kombination von Benzoylpyrazolen und Acylsulfamoylbenzoesäureamiden offenbart.

Die Anwendung der aus diesen Schriften bekannten herbiziden Mitteln ist jedoch in der Praxis häufig mit Nachteilen verbunden. So ist die herbizide Wirksamkeit der bekannten Verbindungen nicht immer ausreichend, oder bei ausreichender herbizider Wirksamkeit werden unerwünschte Schädigungen der Nutzpflanzen beobachtet.

Aufgabe der vorliegenden Erfindung ist die Bereitstellung von herbiziden Mitteln mit gegenüber dem Stand der Technik verbesserten Eigenschaften.

Es wurde nun gefunden, daß ausgewählte Kombinationen von bestimmten Herbiziden mit einigen Safenern eine hervorragende Verträglichkeit in Kulturen von Nutzpflanzen bei gleichzeitig hoher Wirksamkeit gegen unerwünschte Schadpflanzen aufweisen.

Ein Gegenstand der Erfindung sind ausgewählte herbizide Mittel, gekennzeichnet durch einen wirksamen Gehalt an
A) einer antidotisch wirksamen Menge an einem oder mehreren Safenern aus der Gruppe der Acylsulfamoylbenzoesäureamide der Formel (I), gegebenenfalls auch in Salzform, (Komponente A) 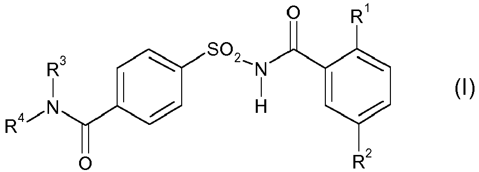 worin
   R¹ bedeutet Methoxy;
   R² bedeutet Wasserstoff;
   R³ bedeutet Wasserstoff;
   R⁴ bedeutet Cyclopropyl
   und
B) einer herbizid wirksamen Menge eines oder mehrerer Herbizide (Komponente B) ausgewählt aus den Gruppen B1, B4, B5, B7 und B10:
   B1 Inhibitoren der Aminosäurebiosynthese
      Flucarbazone (B1.1), Metsulfuron (B1.5), Prosulfuron (B1.8), Tribenuron (B1.10), Chlorimuron (B1.12), Ethoxysulfuron (B1.13), , Halosulfuron (B1.17), Propoxycarbazone (B1.23), Amidosulfuron (B1.25), Chlorsulfuron (B1.26), Triasulfuron (B1.28), Flupyrsulfuron (B1.31),
   B4 Inhibitoren der Fettsäurebiosynthese
      EPTC (B4.1),
   B5 Inhibitoren der Zellteilung
      S-Metolachlor (B5.2),
   B7 Synthetische Auxine
      Dicamba (B7.1),
   B10 Pendimethalin (B10.1),
   wobei diese Mittel die Komponenten A und B in einem Gewichtsverhältnis von 1:200 bis 200:1, vorzugsweise 1:100 bis 100:1, besonders bevorzugt 1:50 bis 50:1, enthalten.

Die chemischen Strukturen der oben und auch noch nachfolgend mit ihren "common names" genannten Wirkstoffe sind beispielsweise aus "The Pesticide Manual" 13. Auflage, 2003, British Crop Protection Council, und von der Webseite http://www.hclrss.demon.co.uk bekannt.

Wenn im Rahmen dieser Beschreibung die Kurzform des "common name" eines Wirkstoffs verwendet wird, so sind damit jeweils alle gängigen Derivate, wie die Ester und Salze, und Isomere, insbesondere optische Isomere umfasst, insbesondere die handelsübliche Form bzw. Formen. Wird mit dem "common name" ein Ester oder Salz bezeichnet, so sind damit auch jeweils alle anderen gängigen Derivate wie andere Ester und Salze, die freien Säuren und Neutralverbindungen, und Isomere, insbesondere optische Isomere umfasst, insbesondere die handelsübliche Form bzw. Formen. Die angegebenen chemischen Verbindungsnamen bezeichnen zumindest eine der von dem "common name" umfaßten Verbindungen, häufig eine bevorzugte Verbindung.

Im Folgenden sind die Begriffe "Komponente A" und "Safener A" als gleichbedeutend zu verstehen. Analoges gilt für die Begriffe "Komponente B" und "Herbizid B".

Die Safener A können auch in Form ihrer Salze eingesetzt werden. Dazu zählen insbesondere die Salze der Alkali- und Erdalkalimetalle, wie Natrium, Kalium, Magnesium und Calcium. Die Salze können durch dem Fachmann bekannte Reaktionen, beispielsweise durch Umsetzung der Safener A mit den entsprechenden Basen, wie Natriumhydroxid oder Kaliumhydroxid, hergestellt werden.

Die erfindungsgemäßen herbiziden Mittel weisen hohe Verträglichkeit gegenüber Kulturplanzen auf. Die hohe Verträglichkeit gegenüber Kulturplanzen kann z.B. bei gemeinsamer Ausbringung der Komponenten A und B beobachtet werden, sie kann häufig auch bei zeitlich versetzter Anwendung (Splitting) festgestellt werden. Möglich ist auch die Anwendung der einzelnen Herbizide und Safener oder der Herbizid-Safener-Kombinationen in mehreren Portionen (Sequenzanwendung), z. B. Anwendungen im Vorauflauf, gefolgt von Nachauflauf-Applikationen oder frühe Nachauflaufanwendungen, gefolgt von Applikationen im mittleren oder späten Nachauflauf. Bevorzugt ist dabei die gemeinsame oder die zeitnahe Anwendung der Wirkstoffe Safener und Herbizd.

Erfindungsgemäß umfasst sind auch solche herbiziden Mittel, die neben den Komponenten A und B noch ein oder mehrere weitere agrochemische Wirkstoffe anderer Struktur enthalten, wie Herbizide, Insektizide, Fungizide oder Safener. Für solche herbiziden Mittel gelten die vor- und nachstehend erläuterten bevorzugten Bedingungen ebenfalls.

Ebenso erfindungsgemäß umfasst sind auch solche herbiziden Mittel, die neben den Komponenten A und B noch Düngenmittel, wie Ammoniumsulfat, Ammoniumnitrat, Harnstoff, Kaliumnitrat und Mischungen davon, enthalten. Für solche herbiziden Mittel gelten die vor- und nachstehend erläuterten bevorzugten Bedingungen ebenfalls.

Weiterhin erfindungsgemäß umfasst sind auch solche herbiziden Mittel, die neben den Komponenten A und B noch Adjuvantien, wie Emulgatoren, Dispergatoren, mineralische und pflanzliche Öle und Mischungen davon, enthalten. Für solche herbiziden Mittel gelten die vor- und nachstehend erläuterten bevorzugten Bedingungen ebenfalls.

Von besonderem Interesse sind herbizide Mittel enthaltend
A) als Komponente A Acylsulfamoylbenzoesäureamide der Formel (I) wie vorstehend definiert und
B) als Komponente B ein oder mehrere Herbizide ausgewählt aus den Gruppen B1, B4, B5, B7 und B10:
   B1 Inhibitoren der Aminosäurebiosynthese
      Flucarbazone (B1.1), Metsulfuron (B1.5), Prosulfuron (B1.8), Tribenuron (B1.10), Chlorimuron (B1.12), Ethoxysulfuron (B1.13), Halosulfuron (B1.17), Propoxycarbazone (B1.23), Amidosulfuron (B1.25), Chlorsulfuron (B1.26), Triasulfuron (B1.28), Flupyrsulfuron (B1.31),
   B4 Inhibitoren der Fettsäurebiosynthese
      EPTC (B4.1),
   B5 Inhibitoren der Zellteilung
      S-Metolachlor (B5.2),
   B7 Synthetische Auxine
      Dicamba (B7.1),
   B10 Pendimethalin (B10.1).

Von ganz besonderem Interesse sind herbizide Mittel enthaltend als Komponente A den Safener A3

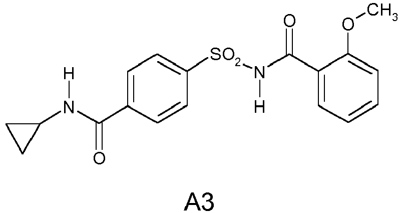

Ebenfalls von ganz besonderem Interesse sind herbizide Mittel enthaltend als Komponente B ein oder mehrere Herbizide ausgewählt aus Flucarbazone, Metsulfuron, Prosulfuron, Tribenuron, Chlorimuron, Ethoxysulfuron, Propoxycarbazone,S-Metolachlor, Dicamba, .

Bevorzugte herbizide Mittel sind solche mit einem Gehalt an einer oder mehreren der in Tabelle 1 genannten Kombinationen der Komponenten A und B.

### Tabelle 1:

(A3+B1.1 (A3+B1.5), (A3+B1.8), (A3+B1.10), (A3+B1.12), (A3+B1.13), (A3+B1.17), (A3+B1.23), (A3+B5.2), (A3+B10.1)

Besonders bevorzugte herbizide Mittel sind solche mit einem Gehalt an einer oder mehreren der in Tabelle 3 genannten Kombinationen der Komponenten A und B.

### Tabelle 3:

(A3+B1.1), (A3+B1.5), (A3+B1.8), (A3+B1.10), (A3+B5.2), (A3+B7.1), (A3+B10.1)

In einer weiteren bevorzugten Ausführungsform sind die erfindungsgemäßen herbiziden Mittel gekennzeichnet durch einen Gehalt an einer Komponente A und zwei verschiedenen Komponenten B der genannten Gruppen B1, B4, B5, B7 und B10. In einer besonders bevorzugten Ausführungsform enthalten die erfindungsgemäßen herbiziden Mittel als Komponente A den Safener A3 und eine Komponente B jeweils einer der Gruppen B1, B4, B5, B7 und B10. In weiteren besonders bevorzugten Ausführungsform enthalten die erfindungsgemäßen herbiziden Mittel als Komponente A den Safener A3 und zwei verschiedene Komponenten B. Solche besonders bevorzugten Ausführungsformen sind in Tabelle 4 genannt.

### Tabelle 4:

(A3+B1.1+B1.5), (A3+B1.1+B1.8), (A3+B1.1+B1.10), (A3+B1.1+B1.12), (A3+B1.1+B1.13), (A3+B1.1+B1.17), (A3+B1.1+B1.23), (A3+B1.1+B1.25), (A3+B1.1+B1.26), (A3+B1.1+B1.28), (A3+B1.1+B1.31), (A3+B1.1+B4.1), (A3+B1.1+B5.2), (A3+B1.1+B7.1), (A3+B1.1+B10.1),
(A3+B1.5+B1.8), (A3+B1.5+B1.10), (A3+B1.5+B1.12), (A3+B1.5+B1.13), (A3+B1.5+B1.17), (A3+B1.5+B1.23 (A3+B1.5+B1.25), (A3+B1.5+B1.26), (A3+B1.5+B4.1), (A3+B1.5+B5.2), (A3+B1.5+B7.1), (A3+B1.5+B10.1),
(A3+B1.8+B1.10), (A3+B1.8+B1.12), (A3+B1.8+B1.13), (A3+B1.8+B1.17), (A3+B1.8+B1.23), (A3+B1.8+B1.25), (A3+B1.8+B1.26), (A3+B1.8+B1.28), (A3+B1.8+B1.31), (A3+B1.8+B4.1), (A3+B1.8+B5.2), (A3+B1.8+B7.1), (A3+B1.8+B10.1),
(A3+B1.10+B1.12), (A3+B1.10+B1.13), (A3+B1.10+B1.17), (A3+B1.10+B1.23), (A3+B1.10+B1.25), (A3+B1.10+B1.26), (A3+B1.10+B1.28), (A3+B1.10+B1.31), (A3+B1.10+B4.1), (A3+B1.10+B5.2), (A3+B1.10+B7.1), (A3+B1.10+B10.1),
(A3+B1.12+B1.13), (A3+B1.12+B1.17), (A3+B1.12+B1.23), (A3+B1.12+B1.25), (A3+B1.12+B1.26), (A3+B1.12+B1.28), (A3+B1.12+B1.31), (A3+B1.12+B4.1), (A3+B1.12+B5.2), (A3+B1.12+B7.1), (A3+B1.12+B10.1),
(A3+B1.13+B1.17), (A3+B1.13+B1.23 (A3+B1.13+B1.25), (A3+B1.13+B1.26), (A3+B1.13+B1.28), (A3+B1.13+B1.31), (A3+B1.13+B4.1), (A3+B1.13+B5.2), (A3+B1.13+B7.1), (A3+B1.13+B10.1),
(A3+B1.17+B1.23), (A3+B1.17+B1.25), (A3+B1.17+B1.26), (A3+B1.17+B1.28), (A3+B1.17+B1.31), (A3+B1.17+B4.1), (A3+B1.17+B5.1), (A3+B1.17+B7.1), (A3+B1.17+B10.1),
(A3+B1.23+B1.25), (A3+B1.23+B1.26), (A3+B1.23+B1.28), (A3+B1.23+B1.31), (A3+B1.23+B4.1), (A3+B1.23+B5.2), (A3+B1.23+B7.1), (A3+B1.23+B10.1),
(A3+B1.25+B1.26), (A3+B1.25+B1.28), (A3+B1.25+B1.31), (A3+B1.25+B4.1), (A3+B1.25+B5.2), (A3+B1.25+B7.1), (A3+B1.25+B10.1),
(A3+B1.26+B1.28), (A3+B1.26+B1.31), (A3+B1.26+B4.1), (A3+B1.26+B5.2), (A3+B1.26+B7.1), (A3+B1.26+B10.1),
(A3+B1.28+B1.31), (A3+B1.28+B4.1), (A3+B1.28+B7.1), (A3+B1.28+B10.1),
(A3+B1.31+B4.1 (A3+B1.31+B5.2), (A3+B1.31+B7.1), (A3+B1.31+B10.1),
(A3+B4.1+B5.2),(A3+B4.1+B7.1), (A3+B4.1+B10.1),
(A3+B5.2+B7.1), (A3+B5.2+B10.1),
(A3+B7.1+B10.1),

In den erfindungsgemäßen herbiziden Mitteln benötigt man in der Regel Aufwandmengen im Bereich von 1 bis 1000 g, vorzugsweise 1 bis 500 g, besonders bevorzugt 5 bis 250 g der Komponente A und 1 bis 2000 g, vorzugsweise 1 bis 1000 g, besonders bevorzugt 5 bis 500 g, der Komponente B. Die Aufwandmenge der Komponente B kann der Fachmann den bekannten Empfehlungen der Hersteller auf den Verpackungseinheiten entnehmen.

Die Gewichtsverhältnisse der Komponenten A zu B können in weiten Bereichen variiert werden und hängen unter anderem ab vom verwendeten Herbizid, den zu bekämpfenden Schadpflanzen und der Nutzpflanzenkultur, in der das erfindungsgemäße Mittel eingesetzt werden soll. Vorzugsweise ist das Mengenverhältnis der Komponenten A zu B im Bereich von 1:100 bis 100:1, besonders bevorzugt im Bereich von 1:50 bis 50:1, insbesondere im Bereich von 1:20 bis 20:1. Optimale Gewichtsverhältnisse können vom jeweiligen Applikationsgebiet, Unkrautspektrum und der eingesetzten Wirkstoffkombination abhängen und in Vorversuchen bestimmt werden.

Die erfindungsgemäß eingesetzten Safener eignen sich auch hervorragend zur Vorbehandlung des Saatgutes von Kulturpflanzen (Beizung der Samen). Ebenso können die Safener auch vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist neben der Saatgutbehandlung die gemeinsame Anwendung mit dem Herbizid. Hierzu können Tankmischungen oder Fertigformulierungen eingesetzt werden.

Bei einer weiteren besonders bevorzugten Ausführungsform handelt es sich um solche herbizide Mittel, bei denen die in Tabelle 4 genannten Kombinationen von A3 mit zwei Herbiziden B jeweils mit einem Fungizid oder Insektizid C kombiniert werden.

Die erfindungsgemäßen Mittel lassen sich zur selektiven Bekämpfung von annuellen und perennierenden monokotylen und dikotylen Schadpflanzen in Getreide-(beispielsweise Gerste, Hafer, Roggen, Weizen), Mais- und Reiskulturen sowie in transgenen Nutzpflanzenkulturen oder auf klassischem Wege selektierten Nutzpflanzenkulturen, die gegen die Wirkstoffe B resistent sind, einsetzen. Ebenso sind sie zur Bekämpfung unerwünschter Schadpflanzen einsetzbar in Plantagenkulturen wie Ölpalme, Zuckerrohr, Kokospalme, Gummibaum, Zitrus, Ananas, Baumwolle, Kaffee, Kakao u.a. sowie im Obst- und Weinbau. Besonders geeignet sind sie auf Grund ihrer guten Verträglichkeit für die Anwendung in Getreide und Mais, ganz besonders in Mais.

Die erfindungsgemäßen Mittel erfassen ein breites Unkrautspektrum. Sie eignen sich zur Bekämpfung von annuellen und perennierenden Schadpflanzen wie z.B. aus den Spezies Abuthylon, Alopecurus, Avena, Chenopodium, Cynoden, Cyperus, Digitaria, Echinochloa, Elymus, Galium, Ipomoea, Kochia, Lamium, Matricaria, Polygonum, Scirpus, Setaria, Sorghum, Veronica, Viola und Xanthium.

Ein weiterer Vorteil der erfindungsgemäßen Mittel besteht auch in ihrer ausgezeichneten Wirkung gegen viele mittlerweile gegen Sulfonylharnstoffe resistent gewordene Schadpflanzen, wie beispielsweise Kochia.

Gegenstand der Erfindung ist auch ein Verfahren zur Bekämpfung von unerwünschtem Pflanzenwuchs, dadurch gekennzeichnet, daß man das Herbizid B mit einem oder mehreren Safener A auf die Schadpflanzen, Pflanzenteile davon oder die Anbaufläche appliziert.

Die erfindungsgemäßen herbiziden Mittel können sowohl als Mischformulierungen der Safener A und der Herbizide B, gegebenenfalls mit weiteren üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die erfindungsgemäßen herbiziden Mittel können auf verschiedene Arten formuliert werden, je nachdem welche biologischen und/oder chemisch-physikalischen Parameter vorgegeben sind. Als allgemeine Formulierungsmöglichkeiten kommen z.B. in Frage: Spritzpulver (WP), emulgierbare Konzentrate (EC), wäßrige Lösungen (SL), Emulsionen (EW) wie Öl-in-Wasser- und Wasser-in-ÖI-Emulsionen, versprühbare Lösungen oder Emulsionen, Ölsuspensionskonzentrat (SC), Dispersionen auf Öl-oder Wasserbasis, Suspoemulsionen, Stäubemittel (DP), Beizmittel, Granulate zur Boden- oder Streuapplikation oder wasserdispergierbare Granulate (WG), wasserdispergierbares Granulat (WDG), wasseremulgierbares Granulat (WEG), ULV-Formulierungen, Mikrokapseln oder Wachse.

Die einzelnen Formulierungstypen sind im Prinzip bekannt und werden z.B. beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London. Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenern, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 0,2 bis 95 Gew.-%, Komponenten A und B, wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen. Staubförmige Formulierungen enthalten meistens 5 bis 20 Gew.-% an Wirkstoff, versprühbare Lösungen etwa 0,2 bis 25 Gew.-% Wirkstoff. Bei Granulaten wie dispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%. Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen herbiziden Mittel hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

### A. Formulierungsbeispiele

a) Ein Stäubemittel (WP) wird erhalten, indem man 10 Gew.-Teile eines Wirkstoffs/Wirksstoffgemischs und 90 Gew.-Teile Talkum als Inertstoff mischt und in einer Schlagmühle zerkleinert.
b) Ein in Wasser leicht dispergierbares, benetzbares Pulver (WG) wird erhalten, indem man 25 Gew.-Teile eines Wirkstoffs/Wirksstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (Triton X 207), 3 Gew.-Teilen Isotridecanolpolyglykolether (8 EO) und 71 Gew.-Teilen paraffinischem Mineralöl (Siedebereich z.B. ca. 255 bis 277° (C) mischt und in einer Reibkugelmühle auf eine Feinheit von unter 5 Mikron vermahlt.
d) Ein emulgierbares Konzentrat (EC) wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.
e) Ein in Wasser dispergierbares Granulat wird erhalten indem man
   75 Gew.-Teile eines Wirkstoffs/Wirksstoffgemischs,
   10 Gew.-Teile ligninsulfonsaures Calcium,
   5 Gew.-Teile Natriumlaurylsulfat, 3 Gew.-Teile Polyvinylalkohol und
   7 Gew.-Teile Kaolin
   mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man
   25 Gew.-Teile eines Wirkstoffs/Wirksstoffgemischs,
   5 Gew.-Teile 2,2'-dinaphthylmethan-6,6'-disulfonsaures Natrium,
   2 Gew.-Teile oleoylmethyltaurinsaures Natrium,
   1 Gew.-Teil Polyvinylalkohol,
   17 Gew.-Teile Calciumcarbonat und
   50 Gew.-Teile Wasser
   auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

### B. Biologische Beispiele

### 1. Herbizide Wirkung im Vorauflauf

Samen von mono- und dikotylen Unkraut- bzw. Kulturpflanzen werden in Papptöpfen in sandiger Lehmerde ausgelegt und mit Erde abgedeckt. Die in Form von benetzbaren Pulvern oder Emulsionskonzentraten formulierten erfindungsgemäßen herbizden Mittel werden dann als wäßrige Suspension bzw. Emulsion mit einer Wasseraufwandmenge von umgerechnet 600 bis 800 l/ha in unterschiedlichen Dosierungen auf die Oberfläche der Abdeckerde appliziert. Nach der Behandlung werden die Töpfe im Gewächshaus aufgestellt und unter guten Wachstumsbedingungen für die Unkräuter gehalten. Die optische Bonitur der Pflanzen- bzw. Auflaufschäden erfolgt nach dem Auflaufen der Versuchspflanzen nach einer Versuchszeit von 3 bis 4 Wochen im Vergleich zu unbehandelten Kontrollen. Die Ergebnisse sind in Tabelle A zusammengefasst.

### 2. Herbizide Wirkung im Nachauflauf

Samen von mono- bzw. dikotylen Unkraut- bzw. Kulturpflanzen werden in Holzfasertöpfen oder in Plastiktöpfen in sandigem Lehmboden ausgelegt, mit Erde abgedeckt und im Gewächshaus, während der Vegetationsperiode auch im Freien außerhalb des Gewächshauses, unter guten Wachstumsbedingungen angezogen. 2-3 Wochen nach der Aussaat werden die Versuchspflanzen im Ein- bis Drei-Blattstadium behandelt. Die als Spritzpulver (WP) oder Flüssigkeit (EC) formulierten erfindungsgemäßen herbiziden Mittel werden in unterschiedlichen Dosierungen mit einer Wasseraufwandmenge von umgerechnet 300 l/ha unter Zusatz von Netzmittel (0,2 bis 0,3 %) auf die Pflanzen und die Bodenoberfläche gespritzt. 3 bis 4 Wochen nach Behandlung der Versuchspflanzen wird die Wirkung der Präparate visuell im Vergleich zu unbehandelten Kontrollen bonitiert. Die Ergebnisse sind in Tabelle B zusammengefasst.

### 3. Saatgutbehandlung

Saatgut von Mais werden mit unterschiedlichen Mengen eines Safeners behandelt (gebeizt) und anschließend in sandiger Lehmerde ausgelegt und mit Erde bedeckt. Die als emulgierbare Konzentrate oder Stäubemittel formulierten Herbizide werden mit einer Wasseraufwandmenge von umgerechnet 300 bis 800l/ha in unterschiedlichen Dosierungen auf die Oberfläche der Abdeckerde appliziert. Die optische Bewertung der Schäden an Nutzpflanzen erfolgt 3 bis 5 Wochen nach der Behandlung. Die Ergebnisse sind in Tabellen C und D zusammengefasst.

Die herbizide Wirkung beziehungsweise Schädigung ist jeweils in Prozent angegeben: 100 % Wirkung = Pflanzen sind abgestorben, 0 % Wirkung = wie unbehandelte Kontrollpflanzen. Die Abkürzung "a.i." bedeutet Wirkstoff (active ingredient).

**Tabelle A Wirkung im Vorauflauf**

| Komponente | Dosierung [g a.i./ha | Schädigung von Mais | Verringerung der Schädigung |
|---|---|---|---|
| B1.1 | 31 | 90% | |
| B1.1 + A3 | 31 + 100 | 20% | 78% |
| B1.8 | 125 | 60% | |
| B1.8 + A3 | 125 + 100 | 20% | 67% |
| B1.10 | 20 | 20% | |
| B1.10 + A3 | 20 + 100 | 10% | 50% |
| B1.13 | 63 | 40% | |
| B1.13 + A3 | 63 + 100 | 20% | 50% |
| B1.28 | 150 | 70% | |
| B1.28 + A3 | 150 + 100 | 20% | 71% |
| | 1500 | 23% | |
| B5.2 | | | |
| B5.2 + A3 | 1500 + 300 | 5% | 78% |
| B10.1 | 3300 | 65% | |
| B10.1 + A3 | 3300 + 300 | 30% | 54% |

**Tabelle B Wirkung im Nachauflauf**

| Komponente | Dosierung [g a.i./ha] | Schädigung von Mais | Verringerung der Schädigung |
|---|---|---|---|
| B1.1 | 31 | 100% | |
| B1.1 + A3 | 31 + 100 | 30% | 70% |
| B1.5 | 13 | 50% | |
| B1.5 + A3 | 13 + 100 | 10% | 80% |
| B1.12 | 31 | 70% | |
| B1.12 + A3 | 31 + 100 | 10% | 86% |
| B1.13 | 63 | 40% | |
| B1.13 + A3 | 63 + 100 | 20% | 50% |
| B1.17 | 31 | 10% | |
| B1.17 + A3 | 31 + 100 | 0% | 100% |
| B1.25 | 125 | 50% | |
| B1.25 + A3 | 125 + 100 | 10% | 80% |
| B1.26 | 25 | 70% | |
| B1.26 + A3 | 25 + 100 | 10% | 86% |
| B1.31 | 38 | 40% | |
| B1.31 + A3 | 38 + 100 | 10% | 75% |
| B4.1 | 3500 | 13% | |
| B4.1 + A3 | 3500+ 100 | 5% | 62% |
| B7.1 | 400 | 30% | |
| B7.1 + A3 | 400+50 | 0% | 100% |

In Tabellen 3 und 4 ist die Dosierung des Herbizids (Komponente B) in Gramm pro Hektar und die des Safeners (Komponente A) in Gramm pro Kilogramm Saatgut angegeben.

**Tabelle C Wirkung im Falle von Saatgutbehandlung, Vorauflauf**

| Komponente | Dosierung | Schädigung von Mais | Verringerung der Schädigung |
|---|---|---|---|
| B1.10 | 63 | 50% | |
| B1.10 + A3 | 63 + 0,5 | 20% | 60% |
| B1.25 | 40 | 40% | |
| B1.25 + A3 | 40 + 0,5 | 20% | 50% |

**Tabelle D Wirkung im Falle von Saatgutbehandlung Nachauflauf**

| Komponente | Dosierung | Schädigung von Mais | Verringerung der Schädigung |
|---|---|---|---|
| B1.1 | 31 | 100% | |
| B1.1 + A3 | 31 + 0,5 | 20% | 80% |
| B1.5 | 13 | 50% | |
| B1.5 + A3 | 13 + 0,5 | 10% | 80% |
| B1.12 | 31 | 70% | |
| B1.12 + A3 | 31 + 0,5 | 20% | 71% |
| B1.23 | 38 | 95% | |
| B1.23 + A3 | 38 + 0,5 | 30% | 68% |
| B1.25 | 125 | 65% | |
| B1.25 + A3 | 125 + 0,5 | 20% | 69% |
| B1.31 | 38 | 40% | |
| B1.31 + A3 | 38 + 0,5 | 10% | 75% |

Die Ergebnisse der Tabellen A bis D zeigen, daß die erfindungsgemäßen herbiziden Mittel zu einer deutlichen Verringerung der Schädigung von Kulturpflanzen führen.

## Patentansprüche

1. Herbizides Mittel, **gekennzeichnet durch** einen wirksamen Gehalt an
A) einer antidotisch wirksamen Menge des Safeners der Formel(I), gegebenenfalls auch in Salzform, (Komponente A) 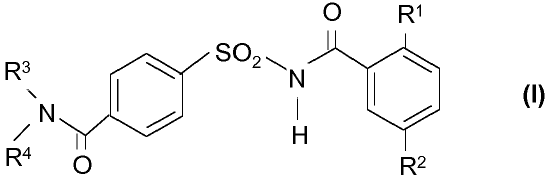 worin
R¹ Methoxy bedeutet,
R² Wasserstoff bedeutet,
R³ Wasserstoff bedeutet und
R⁴ Cyclopropyl bedeutet
und
B) einer herbizid wirksamen Menge eines oder mehrer Herbizide (Komponente(n) B) ausgewählt aus der Gruppe umfassend Flucarbazone, Metsulfuron, Prosulfuron, Tribenuron, Chlorimuron, Ethoxysulfuron, Halosulfuron, Propoxycarbazone, Amidosulfuron, Chlorsulfuron, Triasulfuron, Flupyrsulfuron, EPTC, S-Metolachlor, Dicamba und Pendimethalin
und
wobei diese Mittel die Komponenten (A) und (B) in einem Gewichtsverhältnis von 1:200 bis 200:1 enthalten.

2. Herbizides Mittel nach Anspruch 1, **gekennzeichnet durch** einen wirsamen Gehalt an Metsulfuron, Prosulfuron, Tribenuron, Chlorimuron, Ethoxysulfuron, Halosulfuron, Amidosulfuron, Chlorsulfuron, Triasulfuron oder Flupyrsulfuron als Komponente (B).

3. Herbizide Mittel nach Anspruch 1, **gekennzeichnet durch** einen wirksamen Gehalt an Flucarbazone als Komponente (B).

4. Herbizide Mittel nach Anspruch 1, **gekennzeichnet durch** einen wirksamen Gehalt an Propoxycarbazone als Komponente (B).

5. Herbizide Mittel nach Anspruch 1, **gekennzeichnet durch** einen wirksamen Gehalt an EPTC, S-Metolachlor, Dicamba und Pendimethalin als Komponente (B).

6. Verfahren zur Bekämpfung von Schafpflanzen in Nutzpflanzenkulturen, **dadurch gekennzeichnet, dass** eine herbizid wirksame Menge eines herbizid wirksamen Mittels gemäß einem oder mehreren der Ansprüche 1-5 auf die Schadpflanzen, Kulturpflanzen, Pflanzensamen oder die Fläche, auf der die Pflanzen wachsen, aufgebracht wird.

7. Verfahren gemäß Anspruch 6, **dadurch gekennzeichnet, dass** Saatgut einer Kulturpflanze mit einem Safener der Komponente (A) des herbiziden Mittels gebeizt wurde, und die Anwendung des Herbizids der Komponente (B) vor oder nach dem Auflaufen der Pflanzen erfolgt.

8. Verfahren nach einem der Ansprüche 6 oder 7 zur Bekämpfung von Schadpflanzen in monokotylen Pflanzenkulturen.

9. Verfahren gemäß einem der Ansprüche 6 oder 7, **dadurch gekennzeichnet, dass** die Pflanzen aus der Gruppe Mais, Weizen, Roggen, Gerste, Hafer, Reis, Sorghum, Baumwolle oder Soja stammen.

10. Verfahren gemäß den Ansprüchen 6 bis 9, **dadurch gekennzeichnet, dass** die Pflanzenkulturen gentechnisch verändert oder durch Mutationsselektion erhalten wurden.

## Claims

1. A herbicidal composition, comprising an effective amount of
A) an antidotically effective amount of the safener of the formula (I), if appropriate also in salt form, (component A) 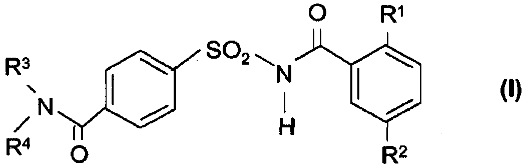 in which
R¹ is methoxy,
R² is hydrogen,
R³ is hydrogen, and
R⁴ is cyclopropyl,
and
B) a herbicidally effective amount of one or more herbicides (component(s) B) selected from the group comprising flucarbazone, metsulfuron, prosulfuron, tribenuron, chlorimuron, ethoxysulfuron, halosulfuron, propoxycarbazone, amidosulfuron, chlorsulfuron, triasulfuron, flupyrsulfuron, EPTC, S-metolachlor, dicamba and pendimethalin
and
where these compositions comprise the components (A) and (B) in a weight ratio of from 1:200 to 200:1.

2. The herbicidal composition as claimed in claim 1 which comprises an effective amount of metsulfuron, prosulfuron, tribenuron, chlorimuron, ethoxysulfuron, halosulfuron, amidosulfuron, chlorsulfuron, triasulfuron, or flupyrsulfuron as component (B)

3. The herbicidal composition as claimed in claim 1 which comprises an effective amount of flucarbazone as component (B).

4. The herbicidal composition as claimed in claim 1 which comprises an effective amount of propoxycarbazone as component (B).

5. The herbicidal compostion as claimed in claim 1 which comprises an effective amount of EPTC, S-metolachlor, dicamba and pendimethalin as component (B) .

6. A method for controlling harmful plants in crops of useful plants which comprises applying a herbicidally effective amount of a herbicidally active composition according to one or more of claims 1-5 to the harmful plants, the crop plants, the plant seeds or the area in which the plants grow.

7. The method as claimed in claim 6 wherein the seed of a crop plant is dressed with a safener of component (A) of the herbicidal composition and the herbicide of component (B) is applied before or after the emergence of the plants.

8. The method as claimed in either of claims 6 and 7 for controlling harmful plants in crops of monocotyledonous plants.

9. The method as claimed in either of claims 6 and 7, wherein the plants are from the group consisting of corn, wheat, rye, barley, oats, rice, sorghum, cotton or soybeans.

10. The method as claimed in claims 6 to 9 wherein the crop plants have been genetically modified or have been obtained by mutation selection.

## Revendications

1. Agent herbicide, **caractérisé par** une teneur efficace en :
A) une quantité à effet d'antidote de l'agent protecteur de formule (I), éventuellement également sous forme saline (composant A), 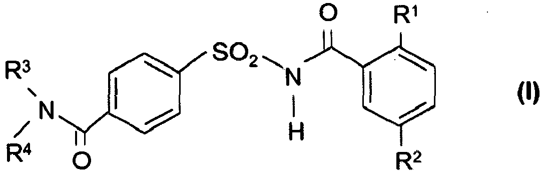 dans laquelle
R¹ signifie méthoxy,
R² signifie hydrogène,
R³ signifie hydrogène, et
R⁴ signifie cyclopropyle,
et
B) une quantité à effet herbicide d'un ou de plusieurs herbicides (composant(s) B) choisis dans le groupe comprenant la flucarbazone, le metsulfuron, le prosulfuron, le tribénuron, le chlorimuron, l'éthoxysulfuron, l'halosulfuron, la propoxycarbazone, l'amidosulfuron, le chlorsulfuron, le triasulfuron, le flupyrsulfuron, l'EPTC, le S-métolachlore, le dicamba et la pendiméthaline,
ces agents contenant les composants (A) et (B) en un rapport en poids de 1:200 à 200:1.

2. Agent herbicide selon la revendication 1, **caractérisé par** une teneur efficace en metsulfuron, prosulfuron, tribénuron, chlorimuron, éthoxysulfuron, halosulfuron, amidosulfuron, chlorsulfuron, triasulfuron ou flupyrsulfuron en tant que composant (B) .

3. Agent herbicide selon la revendication 1, **caractérisé par** une teneur efficace en flucarbazone en tant que composant (B).

4. Agent herbicide selon la revendication 1, **caractérisé par** une teneur efficace en propoxycarbazone en tant que composant (B).

5. Agent herbicide selon la revendication 1, **caractérisé par** une teneur efficace en EPTC, S-métolachlore, dicamba et pendiméthaline en tant que composant (B).

6. Procédé de lutte contre des plantes nuisibles dans des cultures de plantes utiles, **caractérisé en ce qu'**une quantité à effet herbicide d'un agent à effet herbicide selon une ou plusieurs des revendications 1 à 5 est appliquée sur les plantes nuisibles, les plantes cultivées, les graines des plantes ou la surface sur laquelle les plantes poussent.

7. Procédé selon la revendication 6, **caractérisé en ce que** les graines d'une plante cultivée ont été traitées avec un agent protecteur selon le composant (A) de l'agent herbicide, et l'utilisation de l'herbicide selon le composant (B) a lieu avant ou après la levée des plantes.

8. Procédé selon l'une quelconque des revendications 6 ou 7 pour lutter contre des plantes nuisibles dans des cultures de plantes monocotylédones.

9. Procédé selon l'une quelconque des revendications 6 ou 7, **caractérisé en ce que** les plantes sont issues du groupe constitué par le maïs, le blé, le seigle, l'orge, le chanvre, le riz, le sorgho, le coton ou le soja.

10. Procédé selon les revendications 6 à 9, **caractérisé en ce que** les cultures de plantes ont été modifiées par génie génétique ou ont été obtenues par sélection de mutations.
